# EUROPEAN PATENT SPECIFICATION

(11) **EP 3 431 797 B1**
(45) Date of publication and mention of the grant of the patent: **04.03.2020**
(21) Application number: 18000588.6
(22) Date of filing: 10.07.2018
(51) Int. Cl.: F16D 48/06

(54) **VEHICLE CLUTCH CONTROL SYSTEMS**
FAHRZEUGKUPPLUNGSTEUERUNGSSYSTEME
SYSTÈMES DE COMMANDE D'EMBRAYAGE D'UN VÉHICULE

(30) Priority: 20.07.2017 GB 201711664
(43) Date of publication of application: 23.01.2019
(73) Proprietor: Raicam Clutch Limited, Milton Keynes Buckinghamshire MK9 1FF (GB)
(72) Inventor: CHILD, David Stephen, Leamington Spa, Warwickshire CV33 9ST (GB)
(74) Representative: Morrall, Roger

(56) References cited:
- EP-A1- 2 824 368
- WO-A1-2017/089200
- DE-A1- 10 308 518

## Description

This invention relates to vehicle clutch control systems and in particular to such control systems in which an electronically controlled clutch actuator engages and disengages the clutch.

In such systems the clutch actuator may be controlled completely by an electronic control system or may also be controllable manually by the vehicle driver using, for example, a clutch control pedal. See, for example, the Applicant's co-pending patent application No. EP2971836

One of the problems associated with electronically controlled clutch actuators is providing a smooth operation of the clutch throughout the working life of the clutch as the clutch wears.

It is an object of the present invention to overcome the problem of smooth clutch engagement outlined above caused by clutch wear.

Thus according to the present invention there is provided a clutch control system for use in a vehicle which has an automatically engaged coasting mode in which the clutch is disengaged and an engine of the vehicle is switched off or running at a speed which is less than the current speed of an input shaft of a transmission of the vehicle, the control system controlling the engagement of the clutch electronically dependent on a number of vehicle operating parameters one of which is the current clutch torque characteristic, that is the curve indicating the torque which the clutch can transmit for a given position of engagement, the control system periodically recalculating this clutch torque characteristic during the life of the clutch whilst the vehicle is on the move to take account of clutch wear, the control system being characterised in that the clutch torque characteristic is recalculated when the clutch is engaged as the vehicle leaves this coasting mode so that the recalculation is undetectable by the vehicle driver.

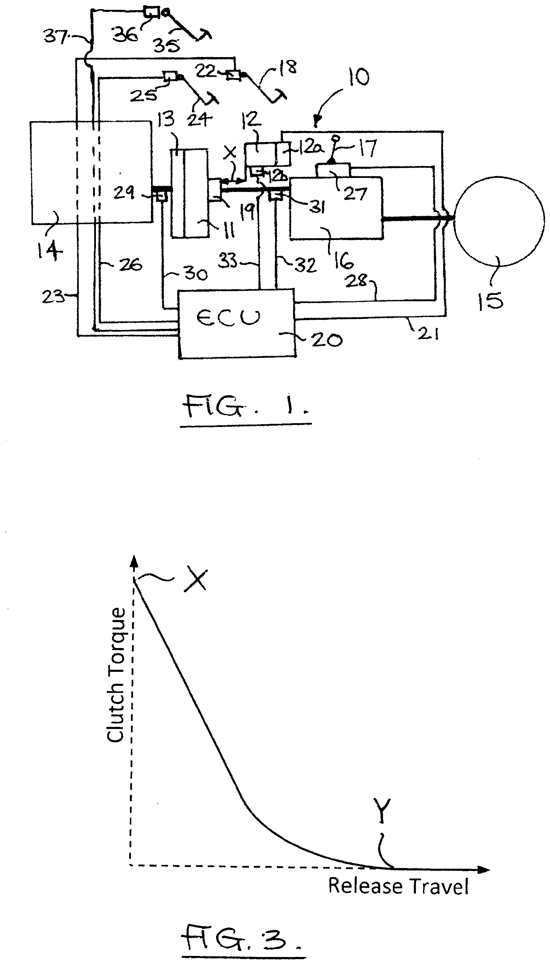

An example of a typical clutch torque characteristic can be seen in the accompanying Figure 3 which shows how the clutch torque varies between a maximum at position X when the clutch is fully engaged and zero when the clutch is fully disengaged at position Y.

If, for example the coasting mode is exited by the vehicle operator applying the brakes, the clutch control system may be arranged to reengage the clutch so that the clutch torque capacity increases proportionally to the braking pressure applied by the vehicle operator to generate engine braking. Once the kiss point of the clutch is reached torque begins to be transmitted across the clutch to give engine braking and a recalculation of the clutch torque characteristic (torque transmitted for a given clutch engagement position) can be made based on the engine acceleration driven by the wheels of the vehicle as the clutch is closed. These torque measurements are made up to the point when the engine speed has reached the speed of the transmission input shaft. This torque vs. clutch engagement data is then stored by the control system to become the new current clutch torque characteristic used to control clutch engagement. Prior to updating of the clutch curve, the recalculated values are preferably checked to ensure that there are no errors in the new curve. The checks include, for example, checking the gradient and limit/data range of the new curve values to ensure no erroneous measurements are used to update the curve.

The above clutch torque measurements are also taken when the coasting mode is exited as a result of the vehicle driver operating a clutch control pedal to request clutch engagement rather than braking.

The above clutch torque measurements are also taken when the coasting mode is exited as a result of the vehicle driver pressing the throttle pedal to request clutch engagement rather than braking. During this event the torque produced by the engine, as a result of demanding torque by pressing the throttle pedal, must be considered in the calculation of torque transmitted by the clutch at any given point in time.

Similarly, if the electronic clutch control system determines that the coasting mode needs to be exited as a result of the operating circumstances of the vehicle these clutch torque measurements can again be made during clutch engagement.

If the vehicle has a hill mode in which the clutch is engaged automatically on a hill descent to give engine braking these clutch torque measurements can again be made during clutch engagement.

The torque characteristics of the clutch can be measured in other circumstances over its working life without this being detected by the vehicle driver.

For example, when the vehicle is operating in steady state conditions (ideally in higher gears and constant throttle pedal positions) the clutch can be slowly opened by the electronic control system and the engine and transmission shaft speeds compared to calculate the slip across the clutch. When the slip reaches a predetermined threshold value, which is undetectable by the operator and which causes minimal clutch wear, the torque being transmitted across the clutch is recorded to be used to update the clutch torque characteristics subject to the above mentioned validity checks. The clutch is then returned to the fully engaged position.

One embodiment of the present invention will now be described, by way of example only, with reference to the accompanying drawings in which:-
Figure 1 shows diagrammatically an example of a vehicle provided with a clutch which can be controlled either electronically or manually by the driver and is suitable for the inclusion of a control system in accordance with the present invention for periodically recalculating the clutch torque characteristic during the life of the clutch;
Figure 2 shows diagrammatically an example of an algorithm which can be used to implement the updating of the clutch torque characteristics in accordance with the present invention, and
Figure 3 shows a typical clutch torque characteristic showing how the clutch torque varies between a maximum at position when the clutch is fully engaged and zero when the clutch is fully disengaged.

Referring to the drawings, Figure 1 diagrammatically shows an example of a typical operating environment for a control system in accordance with the present invention for periodically updating the clutch torque characteristics of a vehicle's drive clutch.

In the example shown from the Applicant's co-pending patent application No. EP2971836, a vehicle is provided with a clutch control system 10 for a drive clutch 11 which has an actuator 12 which changes the position of a release bearing 19 of clutch 11 between a fully engaged position in which the clutch can transmit the maximum torque capacity of the clutch and a fully disengaged position in which the clutch cannot transmit any significant amount of torque. Clutch 11 transmits drive from a flywheel 13 of an engine 14 of the associated vehicle to wheels 15 via a drive line which includes a transmission in the form of a multi-ratio gearbox 16.

The operative ratio in gearbox 16 is manually selected by the vehicle operator using a conventional gear selector 17 and the clutch can be disengaged and engaged by a clutch operating pedal 18.

Clutch actuator 12 includes an electric motor 12a whose rotary motion is turned into axial movement X of a clutch release bearing 19 to disengage and engage the clutch.

The motor 12a is operated by an electronic control unit (ECU) 20 which sends motor operating signals to motor 12a via line 21.

ECU 20 also receives signals as to the position of clutch operating pedal 18 from sensor 22 via line 23, the position of engine throttle pedal 24 from sensor 25 via line 26, the position of a vehicle brake pedal 35 from sensor 36 via a line 37 and the gear selected in gearbox 16 from sensor 27 via line 28.

ECU 20 also receives an engine speed signal from sensor 29 via line 30 and a transmission input shaft speed signal from sensor 31 via line 32. The current position of the actuator 12 (and hence the current clutch release bearing position) is also communicated to the ECU 20 by sensor 12b via line 33.

Any of the signals above may be generated by sensors which are directly connected to other electronic systems in the vehicle, and then measured values are transferred to the ECU 20, for example by a data network such as a CAN within the vehicle.

The control system of the present invention can be incorporated in the ECU 20 or can be provided by a standalone control unit supplied with the necessary control data.

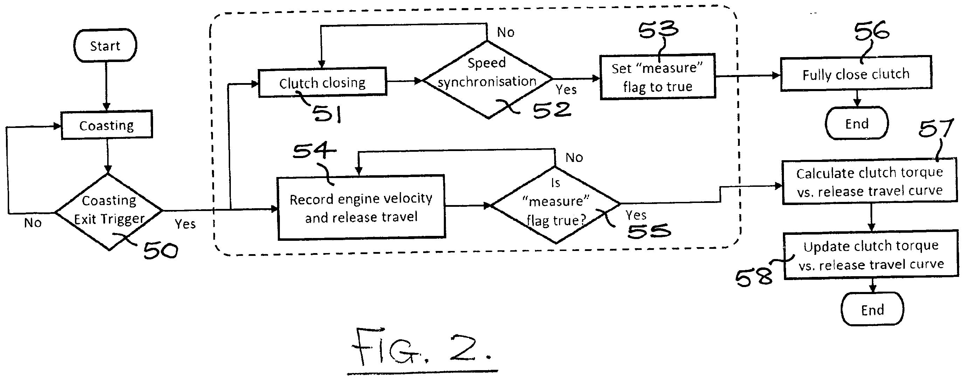

An example of a suitable algorithm for providing the control system of the present invention in a vehicle having an automatically initiated coasting mode is shown in Figure 2.

The control system is arranged to do the recalculation of the clutch torque characteristic at a point in the operation of the vehicle which is undetectable by the vehicle driver.

For example, if the vehicle has an automatically engaged coasting mode in which the clutch is disengaged and an engine of the vehicle is switched off or running at a speed which is less than the current speed of an input shaft of a transmission of the vehicle, the recalculation can conveniently be done when the vehicle leaves this coasting mode.

If, for example the coasting mode is exited by the vehicle operator applying the brakes, the clutch control system may be arranged to reengage the clutch so that the clutch torque capacity increases proportionally to the braking pressure applied by the vehicle operator to generate engine braking. Once the kiss point of the clutch is reached torque begins to be transmitted across the clutch to give engine braking and an estimate of the clutch torque characteristic (torque transmitted for a given clutch engagement position) can be made based on the engine acceleration driven by the wheels of the vehicle as the clutch is closed. These torque measurements are made up to the point when the engine speed has reached the speed of the transmission input shaft. This torque vs. clutch engagement data is then stored by the control system to become the new current clutch torque characteristic (an example of which is shown in Figure 3) used to control clutch engagement.

The above clutch torque measurements can also be taken when the coasting mode is exited as a result of the vehicle driver operating a clutch control pedal to request clutch engagement rather than braking.

The above clutch torque measurements can also be taken when the coasting mode is exited as a result of the vehicle driver pressing the throttle pedal to request clutch engagement rather than braking. During this event the torque produced by the engine, as a result of demanding torque by pressing the throttle pedal, must be considered in the calculation of torque transmitted by the clutch at any given point in time.

Similarly, if the electronic clutch control system determines that the coasting mode needs to be exited as a result of the operating circumstances of the vehicle these clutch torque measurements can again be made during clutch engagement.

Referring to Figure 2, with a vehicle having an automatically engaged coasting mode this can be initiated, for example when the vehicle is moving and in an appropriate gear if the driver does not press either the clutch pedal, brake pedal or throttle pedal then coasting mode can be initiated. When this coasting mode is exited in any of the various circumstances outlined above, as indicated at box 50, two processes begin to operate in parallel. In one process clutch closing begins as indicated at box 51 and continues as indicated at box 52 until the speed of the engine of the vehicle from, for example, sensor 29 synchronises with transmission input shaft speed from, for example, sensor 31. When this occurs a measure flag is set to true as indicated at box 53. In parallel to this operation engine velocity from sensor 29 and clutch release travel from sensor 12b are recorded as indicated by box 54 until the measure flag is set to true as indicated by box 55. Once the measure flag is set to true two separate operations occur. The clutch continues to close until it is fully closed as indicated at box 56 and the clutch torque vs. release travel curve is calculated as indicated at box 57 and stored for updating of the clutch torque vs. release travel curve as indicated at box 58. During clutch engagement at a series of predefined clutch positions the engine velocity is used to calculate the acceleration. The torque transmitted by the clutch to accelerate the engine inertia is calculated by multiplying the acceleration by the engine inertia. Prior to updating the clutch curve, the recalculated curve values are preferably checked to ensure that there are no errors in the new curve. The checks include, for example, checking the gradient and limits/data range of the new curve values to ensure no erroneous measurements are used to update the curve.

If the vehicle has a hill mode in which the clutch is engaged automatically on a hill descent to give engine braking these clutch torque measurements can again be made during this clutch engagement. In such an operating set up the algorithm from boxes 50 to 58 described above is again followed with box 50 being trigger by the engagement of the clutch to engage hill mode.

The torque characteristics of the clutch can be measured in other circumstances over its working life without this being detected by the vehicle driver.

For example, when the vehicle is operating in steady state conditions (ideally in higher gears and constant throttle pedal positions) the clutch can be slowly opened by the electronic control system and the engine and transmission shaft speeds compared to calculate the slip across the clutch. When the slip reaches a predetermined threshold value, which is undetectable by the operator and which causes minimal clutch wear, the torque being transmitted across the clutch is recorded to be used to recalculate the clutch torque characteristics subject to the above mention curve validity checks. The clutch is then returned to the fully engaged position.

The present invention thus provides a control system for periodically recalculating the clutch torque characteristic of a vehicle drive clutch during the life of the clutch to take account of clutch wear and which enables this update to take place at a point in the operation of the vehicle which is undetectable by the vehicle driver.

## Claims

1. A clutch control system for use in a vehicle which has an automatically engaged coasting mode in which the clutch (11) is disengaged and an engine (14) of the vehicle is switched off or running at a speed which is less than the current speed (31) of an input shaft of a transmission (16) of the vehicle, the control system controlling the engagement of the clutch (11) electronically dependent on a number of vehicle operating parameters one of which is the current clutch torque characteristic (X,Y), that is the curve indicating the torque which the clutch can transmit for a given position of engagement, the control system periodically recalculating this clutch torque characteristic during the life of the clutch (11) whilst the vehicle is on the move to take account of clutch wear, the control system being **characterised in that** the clutch torque characteristic is recalculated when the clutch is engaged as the vehicle leaves this coasting mode so that the recalculation is undetectable by the vehicle driver.

2. A control system according to claim 1 in which the coasting mode is exited by the vehicle operator applying the brakes (35), the clutch control system being arranged to reengage the clutch (11) so that the clutch torque capacity increases proportionally to the braking pressure applied by the vehicle operator to generate engine braking, the clutch torque characteristic being recalculated based on the level of engine acceleration driven by the wheels (15) of the vehicle as the clutch (11) is closed up to the point when the engine speed (29) has reached the speed (31) of the transmission input shaft.

3. A control system according to claim 1 in which above clutch torque characteristic recalculation is made when the coasting mode is exited as a result of the vehicle driver operating a clutch control pedal (18) to request clutch engagement rather than braking.

4. A control system according to claim 1 in which above clutch torque characteristic recalculation is made when the coasting mode is exited as a result of the vehicle driver operating a throttle control pedal (24) to request clutch engagement rather than braking.

5. A control system according to claim 1 in which the clutch torque characteristic recalculation is made when the electronic clutch control system determines that the coasting mode needs to be exited as a result of the operating circumstances of the vehicle.

6. A control system according to claim 1 in which the vehicle has a hill mode in which the clutch is engaged automatically on a hill descent to give engine braking these clutch torque measurements for recalculation of the clutch torque characteristic being made during clutch engagement.

7. A control system according to claim 1 in which, when the vehicle is operating in steady state conditions (ideally in higher gears and constant throttle pedal positions), the clutch (11) is slowly opened by the electronic control system and the engine (29) and transmission shaft (31) speeds compared to calculate the slip across the clutch, when the slip reaches a predetermined threshold value, which is undetectable by the operator, the torque being transmitted across the clutch (11) is recorded and is used to recalculate the clutch torque characteristics, the clutch (11) then being returned to its fully engaged position.

## Patentansprüche

1. Kupplungssteuerungssystem zur Verwendung in einem Fahrzeug, das einen automatisch eingeschalteten Leerlaufmodus hat, in dem die Kupplung (11) ausgerückt ist und ein Motor (14) des Fahrzeugs abgeschaltet ist oder mit einer Drehzahl läuft, die geringer als die momentane Drehzahl (31) einer Eingangswelle eines Getriebes (16) des Fahrzeugs ist, wobei das Steuerungssystem das Einrücken der Kupplung (11) in Abhängigkeit von einer Anzahl von Fahrzeugbetriebsparametern elektronisch steuert, von denen einer die momentane Kupplungsdrehmomentcharakteristik (X, Y) ist, die die Kurve ist, die das Drehmoment, das die Kupplung für eine gegebene Einrückstellung übertragen kann, anzeigt, wobei das Steuerungssystem diese Kupplungsdrehmomentcharakteristik während der Nutzungsdauer der Kupplung (11) solange das Fahrzeug in Bewegung ist regelmäßig neu berechnet, um dem Kupplungsverschleiß Rechnung zu tragen, wobei das Steuerungssystem **dadurch gekennzeichnet ist, dass** die Kupplungsdrehmomentcharakteristik neu berechnet wird, wenn die Kupplung eingerückt ist, während das Fahrzeug diesen Leerlaufmodus verlässt, so dass die Neuberechnung von dem Fahrer des Fahrzeugs nicht wahrnehmbar ist.

2. Steuerungssystem nach Anspruch 1, bei dem der Leerlaufmodus von dem die Bremsen (35) anlegenden Fahrzeugbediener verlassen wird, wobei das Kupplungssteuerungssystem ausgebildet ist, um die Kupplung (11) wieder einzurücken, so dass die Kupplungsdrehmomentkapazität proportional zu dem von dem Fahrzeugbediener aufgebrachten Bremsdruck zunimmt, um ein Motorbremsen zu erzeugen, wobei die Kupplungsdrehmomentcharakteristik auf der Grundlage der Größe der von den Rädern (15) des Fahrzeugs angetriebenen Motorbeschleunigung neu berechnet wird, während die Kupplung (11) bis zu dem Punkt geschlossen wird, wenn die Motordrehzahl (29) die Drehzahl (31) der Getriebeeingangswelle erreicht hat.

3. Steuerungssystem nach Anspruch 1, bei dem die obige Kupplungsdrehmomentcharakteristik-Neuberechnung gemacht wird, wenn der Leerlaufmodus als eine Folge dessen verlassen wird, dass der Fahrer des Fahrzeugs ein Kupplungssteuerungspedal (18) betätigt, um eher ein Kupplungseinrücken als ein Bremsen anzufordern.

4. Steuerungssystem nach Anspruch 1, bei dem die obige Kupplungsdrehmomentcharakteristik-Neuberechnung gemacht wird, wenn der Leerlaufmodus als eine Folge dessen verlassen wird, dass der Fahrer des Fahrzeugs ein Drosselklappensteuerungspedal (24) betätigt, um eher ein Kupplungseinrücken als ein Bremsen anzufordern.

5. Steuerungssystem nach Anspruch 1, bei dem die Kupplungsdrehmomentcharakteristik-Neuberechnung gemacht wird, wenn das elektronische Kupplungssteuerungssystem feststellt, dass der Leerlaufmodus als eine Folge der Betriebsumstände des Fahrzeugs verlassen werden muss.

6. Steuerungssystem nach Anspruch 1, bei dem das Fahrzeug einen Bergmodus hat, in dem die Kupplung bei einer Bergabfahrt automatisch eingerückt wird, um ein Motorbremsen zu liefern, wobei diese Kupplungsdrehmomentmessungen zur Neuberechnung der Kupplungsdrehmomentcharakteristik während der Kupplungseinrückung gemacht werden.

7. Steuerungssystem nach Anspruch 1, bei dem, wenn das Fahrzeug unter stationären Bedingungen betrieben wird (idealerweise in höheren Gängen und konstanten Drosselklappenpedalstellungen), die Kupplung (11) langsam von dem elektronischen Steuerungssystem geöffnet wird und die Motor (29)- und Getriebewellen (31)-Drehzahlen verglichen werden, um den Schlupf über die Kupplung hinweg zu berechnen, wenn der Schlupf einen vorbestimmten Schwellenwert erreicht, der von der Bedienungsperson nicht wahrnehmbar ist, wobei das über die Kupplung (11) hinweg übertragene Drehmoment aufgezeichnet und verwendet wird, um die Kupplungsdrehmomentcharakteristika neu zu berechnen, wobei die Kupplung (11) dann wieder in ihre voll eingerückte Stellung zurückgestellt wird.

## Revendications

1. Système de commande d'embrayage destiné à être utilisé dans un véhicule qui présente un mode de roue libre automatiquement en prise dans lequel l'embrayage (11) est dégagé et un moteur (14) du véhicule est désactivé ou tourne à une vitesse qui est inférieure à la vitesse actuelle (31) d'un arbre d'entrée d'une transmission (16) du véhicule, le système de commande commandant l'amenée en prise électronique de l'embrayage (11) en fonction d'un nombre de paramètres de fonctionnement du véhicule, dont l'un est la caractéristique de couple d'embrayage actuelle (X , Y), c'est-à-dire la courbe indiquant le couple que l'embrayage peut transmettre pour une position de venue en prise donnée, le système de commande recalculant périodiquement cette caractéristique de couple d'embrayage pendant la vie de l'embrayage (11) tandis que le véhicule se déplace, pour tenir compte de l'usure de l'embrayage, le système de commande étant **caractérisé par le fait que** la caractéristique de couple d'embrayage est recalculée lorsque l'embrayage est en prise au fur et à mesure que le véhicule sort de ce mode de roue libre de sorte que le nouveau calcul ne puisse pas être détecté par le conducteur du véhicule.

2. Système de commande selon la revendication 1, dans lequel le mode de roue libre est abandonné par le conducteur du véhicule en appliquant les freins (35), le système de commande d'embrayage étant aménagé pour ramener l'embrayage en prise (11) de sorte que la capacité de couple d'embrayage augmente proportionnellement à la pression de freinage appliquée par l'opérateur du véhicule pour générer le freinage de moteur, la caractéristique de couple d'embrayage étant recalculée sur base du niveau d'accélération du moteur entraînée par les roues (15) du véhicule au fur et à mesure que l'embrayage (11) est fermé jusqu'au point où la vitesse du moteur (29) a atteint la vitesse (31) de l'arbre d'entrée de la transmission.

3. Système de commande selon la revendication 1, dans lequel le nouveau calcul de la caractéristique de couple d'embrayage ci-dessus est effectué lorsque le mode de roue libre est abandonné du fait que le conducteur du véhicule actionne une pédale de commande d'embrayage (18) pour demander l'amenée en prise de l'embrayage plutôt que le freinage.

4. Système de commande selon la revendication 1, dans lequel le nouveau calcul de la caractéristique de couple d'embrayage ci-dessus est effectué lorsque le mode de roue libre est abandonné du fait que le conducteur du véhicule actionne une pédale de commande d'accélérateur (24) pour demander l'amenée en prise de l'embrayage plutôt que le freinage.

5. Système de commande selon la revendication 1, dans lequel le nouveau calcul de la caractéristique de couple d'embrayage est effectué lorsque le système de commande électronique d'embrayage détermine que le mode de roue libre doit être abandonné du fait des conditions de fonctionnement du véhicule.

6. Système de commande selon la revendication 1, dans lequel le véhicule présente un mode de pente dans lequel l'embrayage est automatiquement amené en prise dans une descente en pente pour donner au freinage de moteur ces mesures de couple d'embrayage pour recalculer la caractéristique de couple d'embrayage réalisée pendant l'amenée en prise de l'embrayage.

7. Système de commande selon la revendication 1, dans lequel, lorsque le véhicule fonctionne dans des conditions d'état stable (de manière idéale à des vitesses plus élevées et des positions de pédale d'accélérateur constantes), l'embrayage (11) est ouvert lentement par le système de commande électronique et les vitesses du moteur (29) et de l'arbre de transmission (31) sont comparées pour calculer le glissement sur l'embrayage, lorsque le glissement atteint une valeur de seuil prédéterminée qui n'est pas détectable par le conducteur, le couple transmis à travers l'embrayage (11) est enregistré et est utilisé pour recalculer les caractéristiques de couple d'embrayage, l'embrayage (11) étant alors ramené dans sa position entièrement en prise.
